# EUROPEAN PATENT APPLICATION

(11) **EP 4 394 388 A1**
(43) Date of publication of application: **03.07.2024**
(21) Application number: 22861002.8
(22) Date of filing: 11.07.2022
(51) Int. Cl.: G01N 35/04

(54) **CONVEYING DEVICE, SPECIMEN ANALYSIS SYSTEM PROVIDED WITH CONVEYING DEVICE, AND SPECIMEN PRETREATMENT DEVICE PROVIDED WITH CONVEYING DEVICE**

(30) Priority: 26.08.2021 JP 2021138351
(71) Applicant: HITACHI HIGH-TECH CORPORATION, Tokyo 105-6409 (JP)
(72) Inventor: AOYAMA, Yasuaki, Tokyo 100-8280 (JP)
(74) Representative: Mewburn Ellis LLP
(86) International application number: PCT/JP2022/027301
(87) International publication number: WO 2023/026711

(57) **Abstract**

Inductance characteristics of a connected region between magnetic circuit sections is improved. A conveying device 1 includes a plurality of electromagnetic actuators disposed along a side X1, a plurality of electromagnetic actuators disposed along a side X2 opposed to the side X1, a plurality of electromagnetic actuators disposed along a side Y1, and a plurality of electromagnetic actuators disposed along a side Y2 opposed to the side Y1. The number of the electromagnetic actuators disposed along the side X1 is larger than the number of the electromagnetic actuators disposed along the side X2. The number of the electromagnetic actuators disposed along the side Y1 is larger than the number of the electromagnetic actuators disposed along the side Y2. A plurality of magnetic circuit sections 2 are connected one another such that the side X1 or Y1 having the larger number of the electromagnetic actuators is adjacent to the side X2 or Y2 having the smaller number of the electromagnetic actuators.

## Description

### Technical Field

The present invention relates to a conveying device suitable for a specimen analysis system which performs analysis of a biological sample, for example, blood, urine, etc. (hereinafter, referred to as a specimen), and for a specimen pretreatment device which performs pretreatment necessary for the analysis, and to the specimen analysis system and the specimen pretreatment device provided with the conveying device.

### Background Art

PLT 1 discloses a distribution system which conveys a plurality of container carriers on top of a conveyance plane. A plurality of electromagnetic actuators is disposed below the conveyance plane, and by the electromagnetic actuators being driven by a control device, the container carriers are conveyed in desired directions on the conveyance plane.

### Citation List

### Patent Literature

PTL 1: JP2015-502525A

### Summary of Invention

### Technical Problem

In a specimen analysis system for clinical laboratory testing, a test of an instructed analysis item is conducted to a specimen such as blood, plasma, serum, urine, and other body fluid. In the specimen analysis system, devices with a plurality of functions are connected one another so that the respective processings can automatically be carried out. That is, for work efficiency in a laboratory, an analysis section of a plurality of analysis fields such as biochemistry and immunity, and a pretreatment section which performs pretreatment necessary for the analysis are connected one another through a conveyance line, thus being operated as a single system.

A conveyance line used in a conventional specimen analysis system is mainly a belt-driven type. Such a belt-driven type has a problem that, when conveyance stops due to some kind of abnormality during the conveyance, a specimen cannot be supplied to a device on a downstream side. Therefore, paying close attention to wearing of a belt is necessary.

Advance in medical care and progress in aging society have enhanced importance of processing specimens. Hence, in order to improve analysis processing ability of the specimen analysis system, high-speed conveyance, mass simultaneous conveyance, and multiple-direction conveyance of specimens are desired. One example of a technique which realizes such conveyance includes a technique to convey a conveyed object by using magnetic force (see PTL 1).

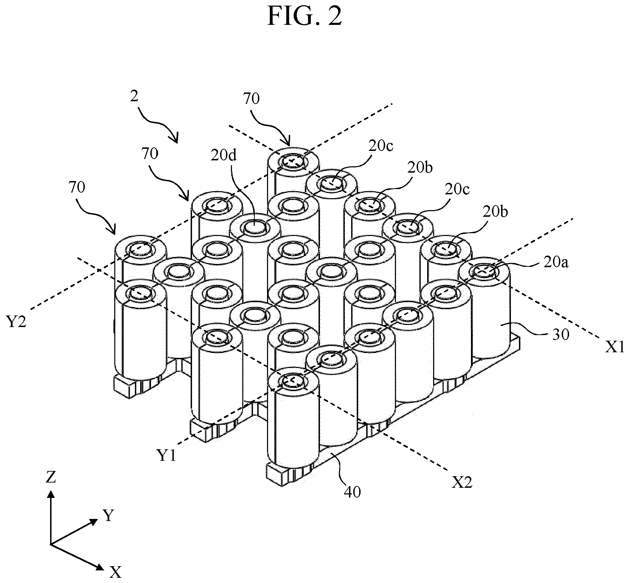

As illustrated in FIG. 2 of PTL 1, the electromagnetic actuators of PTL 1 are arranged in a grid pattern. At a left side and a lower side of a sub-plane in FIG. 2, the electromagnetic actuators are arranged at a pitch of g2. On the other hand, at a right side and an upper side of the conveyance plane in FIG. 2, the electromagnetic actuators are arranged at a pitch of g1 (= g2/2).

Although PTL 1 discloses a configuration in which the conveyance plane is formed by combination of a plurality of sub-planes, how the sub-planes are connected to each other is not disclosed. When the sub-planes are connected such that parts of the sub-planes, where the electromagnetic actuators are dense, are adjacent to each other, or parts of the sub-planes, where the electromagnetic actuators are sparse, are adjacent to each other, inductance characteristics at the connected region differ from inductance characteristics at the other region. As a result, there is a problem that a conveyed object cannot stably be conveyed due to variation in thrust applied to the conveyed object, or degradation in estimation accuracy of a position of the conveyed object.

### Solution to Problem

The present invention includes a plurality of measures for solving the above problem, and one example thereof is a conveying device in which a plurality of magnetic circuit sections each including electromagnetic actuators arranged in a grid pattern are connected one another, each electromagnetic actuator including a tooth made of a magnetic material and a winding wire wound around the tooth. Each of the magnetic circuit sections has a substantially quadrilateral shape, and includes a plurality of first electromagnetic actuators disposed along one of sides opposed one another, a plurality of second electromagnetic actuators disposed along an other one of the sides opposed one another, a plurality of third electromagnetic actuators disposed along one of other sides opposed one another, and a plurality of fourth electromagnetic actuators disposed along an other one of the other sides opposed one another. The number of the first electromagnetic actuators is larger than the number of the second electromagnetic actuators. The number of the third electromagnetic actuators is larger than the number of the fourth electromagnetic actuators. The plurality of magnetic circuit sections are connected one another such that the side having the larger number of the electromagnetic actuators and the side having the smaller number of the electromagnetic actuators are adjacent to each other.

### Advantageous Effects of Invention

According to the present invention, the plurality of magnetic circuit sections are connected one another such that the side having the larger number of the electromagnetic actuators and the side having the smaller number of the electromagnetic actuators are adjacent to each other. Therefore, it can be suppressed that inductance characteristics at the connected region differ from inductance characteristics at the other region. As a result, in the connected region, variation in thrust applied to the conveyed object, and degradation in estimation accuracy of a position of the conveyed object can be suppressed, and thereby the conveyed object can stably be conveyed.

### Brief Description of Drawings

[FIG. 1] FIG. 1 is a view illustrating a configuration of a conveying device of Embodiment 1.
[FIG. 2] FIG. 2 is a perspective view illustrating a magnetic circuit section of the conveying device of Embodiment 1.
[FIG. 3] FIG. 3 is a diagram illustrating a connecting example of magnetic circuit sections of each of a conventional conveying device and the conveying device of Embodiment 1.
[FIG. 4] FIG. 4 is a diagram illustrating a connecting example of magnetic circuit sections of a conveying device of Embodiment 2.
[FIG. 5] FIG. 5 is a diagram illustrating a configuration of a conveying system.
[FIG. 6] FIG. 6 is a diagram illustrating a configuration of a specimen analysis system.
[FIG. 7] FIG. 7 is a diagram illustrating a configuration of a specimen pretreatment device.

### Description of Embodiments

Hereinafter, embodiments of a conveying device, and a specimen analysis system and a specimen pretreatment device provided with the same are described with reference to the drawings.

### <Embodiment 1>

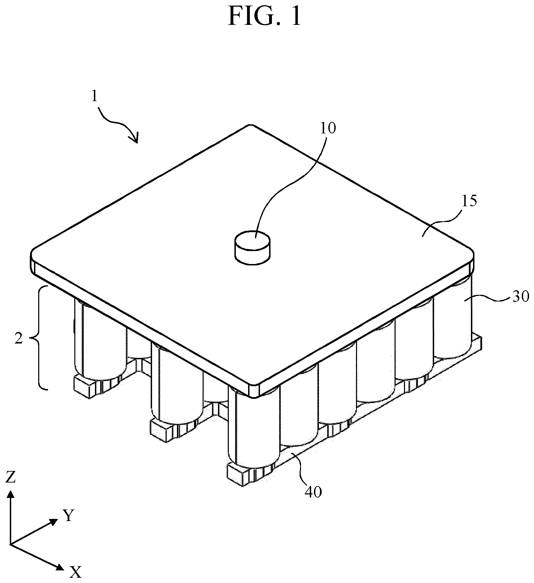

A conveying device of Embodiment 1 is described. FIG. 1 is a view illustrating a configuration of the conveying device of Embodiment 1. The conveying device 1 is a conveying device which conveys a conveyed object 10 in an X direction and a Y direction. FIG. 2 is a perspective view illustrating a magnetic circuit section of the conveying device of Embodiment 1. In a case of conveyance in a long distance, a plurality of conveying devices 1 illustrated in FIG. 1 are connected one another in the X direction and/or the Y direction to achieve the long-distance conveyance of the conveyed object 10. A conveyance surface 15 is placed on a magnetic circuit section 2, and a permanent magnet 11 (see FIG. 8) made of a magnetic material and embedded in the conveyed object 10 moves on top of the conveyance surface 15. The magnetic circuit section 2 illustrated in FIG. 2(a) includes three conveyance lines to convey the conveyed object 10 in the X direction, and three conveyance lines to convey the conveyed object 10 in the Y direction. Each of a plurality of teeth 20 made of a magnetic material and having a cylindrical shape, is wound with a winding wire 30. Note that the tooth 20 is a general term for a tooth 20a to a tooth 20d. The plurality of teeth 20 is magnetically coupled one another at an opposite side (-Z side) from the conveyance surface 15 by a yoke 40 made of a magnetic material. The tooth 20 wound with the winding wire is referred to as an electromagnetic actuator 70. A plurality of electromagnetic actuators 70 are arranged in a grid pattern.

The yoke 40 is formed to have a grid pattern corresponding to the three conveyer lines formed along the X direction, and the three conveyer lines formed along the Y direction. The yoke 40 is made of a magnetic material and is magnetically coupled to the plurality of teeth. The yoke 40 supports the plurality of teeth 20 such that the plurality of teeth 20 extends in a Z direction.

The teeth 20 include a tooth 20a with one tooth adjacent thereto, a tooth 20b with two teeth adjacent thereto, a tooth 20c with three teeth adjacent thereto, and a tooth 20d with four teeth adjacent thereto. The tooth 20a is a tooth disposed at the outermost side. The tooth 20a is adjacent to another tooth at only one side in one of the X direction and the Y direction. The tooth 20b is adjacent to another tooth at each side in the X direction or the Y direction. The tooth 20c is adjacent to another tooth at each side in one of the X direction and the Y direction, and at one side in the other one of the X direction and the Y direction. The tooth 20c is adjacent to another tooth at each side in the X direction and at each side in the Y direction.

The teeth 20a, 20b, 20c, and 20d have magnetic circuit characteristics different from each other. Difference in the number of adjacent teeth causes difference in inductance characteristics between the respective teeth. For example, the tooth 20a has less adjacent teeth comparing to the teeth 20b to 20d. Therefore, a magnetic flux density generated when a certain current is supplied to the winding wire 30 is smaller than the case of the teeth 20b to 20d. Thus, thrust which acts on the conveyed object 10 at the tooth 20a is smaller. In addition, a current value when a certain voltage is applied also varies between the winding wire 30 of the tooth 20a and the winding wires 30 of the teeth 20b to 20d, which also varies a magnetic saturation level. Therefore, a problem of deterioration in detection accuracy of a position of a conveyed object by utilizing magnetic saturation may occur.

The magnetic circuit section 2 has a substantially quadrilateral shape, where a side X1 and a side X2 which configure the substantially quadrilateral shape are opposed one another, and a side Y1 and a side Y2 which configure the substantially quadrilateral shape are opposed one another. The number of the plurality of electromagnetic actuators 70 disposed along the one side X1 (six in Embodiment 1) is larger than the number of the plurality of electromagnetic actuators 70 disposed along the other side X2 (three in Embodiment 1). Moreover, the number of the plurality of electromagnetic actuators 70 disposed along the one side Y1 (six in Embodiment 1) is larger than the number of the plurality of electromagnetic actuators 70 disposed along the other side Y2 (three in Embodiment 1).

The plurality of electromagnetic actuators 70 disposed along the side X1 are disposed to be adjacent to each other. Moreover, the plurality of electromagnetic actuators 70 disposed along the side X2 are disposed having a gap therebetween. That is, a pitch between the plurality of electromagnetic actuators 70 disposed along the side X1 is smaller than a pitch between the plurality of electromagnetic actuators 70 disposed along the side X2. Similarly, the plurality of electromagnetic actuators 70 disposed along the side Y1 are disposed to be adjacent to each other. Moreover, the plurality of electromagnetic actuators 70 disposed along the side Y2 are disposed having a gap therebetween. That is, a pitch between the plurality of electromagnetic actuators 70 disposed along the side Y1 is smaller than a pitch between the plurality of electromagnetic actuators 70 disposed along the side Y2.

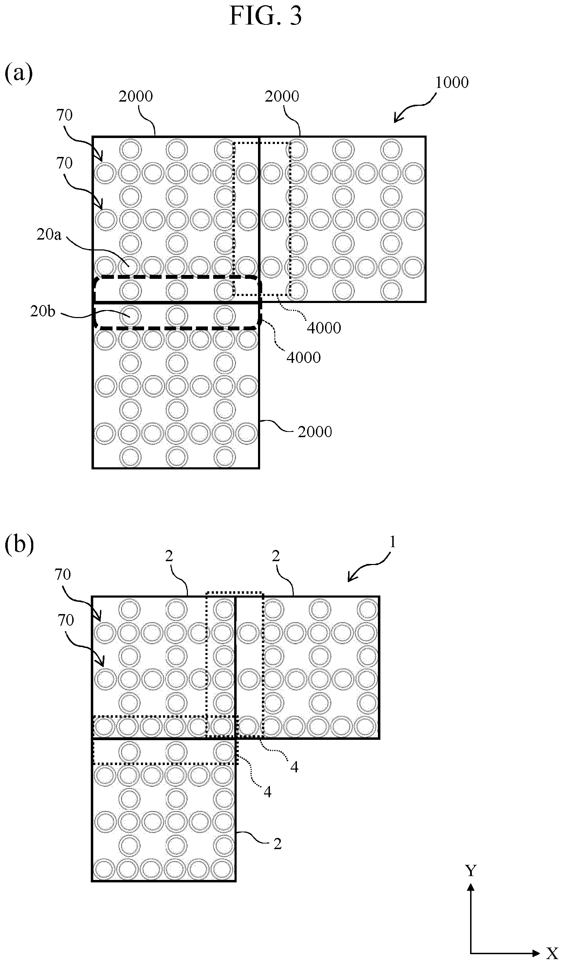

FIG. 3 is a diagram illustrating a connecting example of magnetic circuit sections of each of a conventional conveying device and the conveying device of Embodiment 1. FIG. 3(a) a diagram showing the connecting example of the magnetic circuit sections of the conventional conveying device. FIG. 3(b) is a diagram showing the connecting example of the magnetic circuit sections of the conveying device of Embodiment 1.

A conventional conveying device 1000 in FIG. 3(a) includes three magnetic circuit sections 2000. The three magnetic circuit sections 2000 are connected one another to form an L-shape. When the conventional magnetic circuit sections 2000 have a desired formation, density of the electromagnetic actuators 70 in a connected region 4000 between the magnetic circuit sections 2000 is low. Therefore, in the connected region 4000 of the conventional conveying device 1000, thrust applied to the conveyed object 10 may vary, or estimation accuracy of a position of the conveyed object 10 may degrade. As a result, during conveyance of the conveyed object 10, the conveyed object 10 may sway or swing, deviate from a conveyance surface of the conveying device 1000, or damage the conveyance surface.

The conveying device 1 of Embodiment 1 includes three magnetic circuit section 2 described with reference to FIG. 2. The three magnetic circuit sections 2 are connected one another to form an L-shape. When the magnetic circuit sections 2 have a desired formation, the magnetic circuit sections 2 are connected one another such that a part of one magnetic circuit section 2, where the electromagnetic actuators 70 are dense, and a part of an other magnetic circuit section 2, where the electromagnetic actuators 70 are sparse, are adjacent to each other. In this configuration, the density of the electromagnetic actuators 70 is repeated to alternately be high, low, high, and low, along the X direction and the Y direction. As a result, at a connected region 4 between the magnetic circuit sections 2, variation in thrust applied to the conveyed object 10 can be suppressed, and degradation in estimation accuracy of the position of the conveyed object 10 can be reduced. Thereby, it can be suppressed that, during conveyance of the conveyed object 10, the conveyed object 10 sways or swings, deviates from the conveyance surface of the conveying device 1000, or damages the conveyance surface.

### <Embodiment 2>

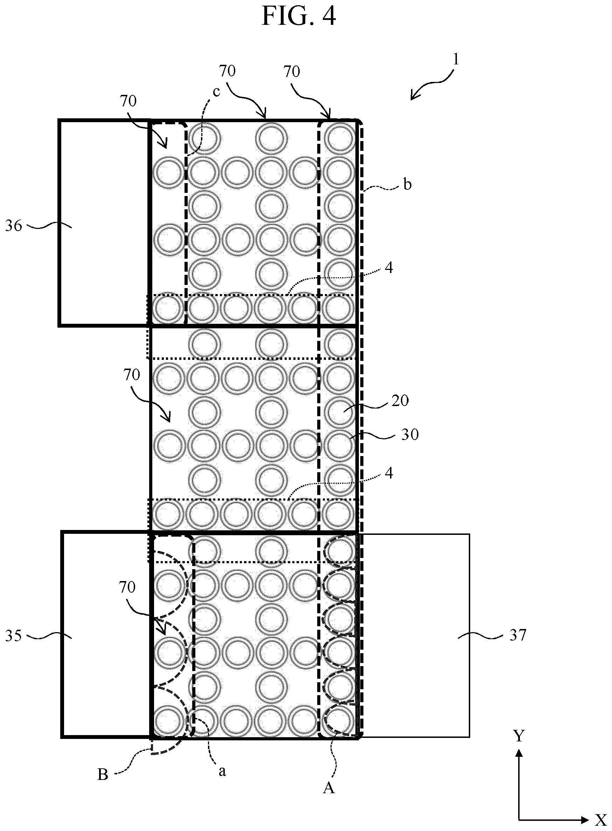

A conveying device of Embodiment 2 is described with reference to FIG. 4. Description of parts similar to Embodiment 1 is omitted. FIG. 4 is a diagram illustrating a connecting example of magnetic circuit sections of the conveying device of Embodiment 2. The three magnetic circuit sections 2 are connected one another linearly along the Y direction. When the magnetic circuit sections 2 have a desired formation, the magnetic circuit sections 2 are connected one another such that a part of one magnetic circuit section 2, where the electromagnetic actuators 70 are dense, and a part of an other magnetic circuit section 2, where the electromagnetic actuators 70 are sparse, are adjacent to each other. In this configuration, the density of the electromagnetic actuators 70 is repeated to alternately be high, low, high, and low, along the Y direction. As a result, at the connected region 4 between the magnetic circuit sections 2, variation in thrust applied to the conveyed object 10 can be suppressed, and degradation in estimation accuracy of the position of the conveyed object 10 can be reduced. Thereby, it can be suppressed that, during conveyance of the conveyed object 10, the conveyed object 10 sways or swings, deviates from the conveyance surface of the conveying device 1000, or damages the conveyance surface.

In Embodiment 2, a specimen feeding device 35 is disposed at a left side of the lowermost magnetic circuit section 2 in FIG. 4 (that is, disposed to be adjacent to a region a where the number of electromagnetic actuators 70 is small). In other words, the region a where the number of electromagnetic actuators 70 is small is a loading section for the conveyed object 10. This region a has a large pitch between the electromagnetic actuators 70. The conveyed object 10 having the permanent magnet is attracted to the electromagnetic actuator 70 which configures the conveyance line. That is, a region B where the conveyed object 10 can stably be loaded is large. Thus, even when a loaded position of the conveyed object 10 is deviated during loading thereof, the conveyed object 10 can be attracted to a target position by attraction force of the electromagnetic actuator 70, and thereby the conveyed object 10 can stably be loaded.

In Embodiment 2, a specimen analysis device 36 is disposed at a left side of the uppermost magnetic circuit section 2 in FIG. 4 (that is, disposed to be adjacent to a region c where the number of electromagnetic actuators 70 is small). In other words, the region c where the number of electromagnetic actuators 70 is small is an unloading section for the conveyed object 10. This region c has a large pitch between the electromagnetic actuators 70. The conveyed object 10 having the permanent magnet is unlikely to be affected by the electromagnetic actuator 70 which configures an other conveyance line, and thus the conveyed object 10 can stably be unloaded.

When the conveyed object 10 is conveyed from the specimen feeding device 35 to the specimen analysis device 36, the conveyance line at the left side in FIG. 4 is the shortest route. That is, this left-side conveyance line is the most efficient route for conveying the conveyed object 10 from the specimen feeding device 35 to the specimen analysis device 36. Therefore, this left-side conveyance line is set as a fast conveyance line, and the conveyed object 10 is conveyed at high speed from the specimen feeding device 35 to the specimen analysis device 36.

In addition, in Embodiment 2, a dispensing device 37 is disposed at a right side of the magnetic circuit section 2 in FIG. 4 (that is, disposed to be adjacent to a region b where the number of electromagnetic actuators 70 is large). The region b where the electromagnetic actuators 70 are arranged to be dense has a small pitch between the electromagnetic actuators 70 in the Y direction, and the position of the conveyed object 10 can be controlled finely. Thus, the conveyed object 10 can be positioned corresponding to a position for dispensation by the dispensing device 37.

In addition, in a case in which the conveyed object 10 is conveyed along the Y direction in the region b, the numbers of electromagnetic actuators 70 are different between the left and right directions (±X directions) with respect to the position of the region b. That is, while the electromagnetic actuator 70 exists on the left side of the region b, the electromagnetic actuator 70 does not exist on the right side of the region b. Therefore, in the case in which the conveyed object 10 is conveyed in the Y direction in the region b, thrust in the left direction acts on the conveyed object 10 at every pitch of the electromagnetic actuators 70, which causes speed pulsation during conveyance of the conveyed object 10.

In this respect, in Embodiment 2, the region b where the electromagnetic actuators 70 are dense is not set as a conveyance line, but set as a retention region of the conveyed object 10. Alternatively, the region b where the electromagnetic actuators 70 are dense is set as a slow conveyance line. Therefore, increase in a retention amount of the conveyed object 10 and speed pulsation during conveyance of the conveyed object 10 can be suppressed.

### <Conveying System>

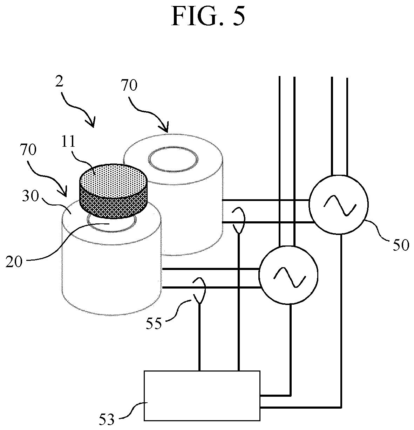

FIG. 5 is a diagram illustrating one example of a configuration of a conveying system to convey the conveyed object 10. The permanent magnet 11 of the conveyed object 10 is conveyed on top of the conveyance surface 15 placed on the magnetic circuit section 2. The conveying system illustrated in FIG. 5 is a system in which a location of the conveyed object 10 on the conveyance surface is estimated based on relation between voltage applied to the winding wire and current flowing in the winding wire. In this system, current detecting units 55 are connected to the respective winding wires 30, and the position of the conveyed object 10 is estimated based on information from the plurality of current detecting units 55. A drive circuit 50 applies voltage to the coil, thus causing thrust applied to the conveyed object 10. An arithmetic unit 53 controls the drive circuit 50 based on a detected current value.

As the permanent magnet 11, for example, a permanent magnet 11 such as neodymium and ferrite is used. Alternative to the permanent magnet 11, other magnets and a soft magnetic material may be used. Moreover, alternative to the permanent magnet 11, combination of the permanent magnet 11 and a soft magnetic material may be used. Note that the "magnetic material" as used herein means the permanent magnet 11, other magnets and a soft magnetic material, combination of the permanent magnet 11 and a soft magnetic material, etc. Here, the permanent magnet 11 is used as one example of the magnetic material.

In the conveying system, relative positional information between the conveyed object 10 and the winding wire 30 is necessary. This is for the purposes of efficiently acting on the conveyed object 10 the electromagnetic force generated at the tooth 20 by current being supplied to the winding wire 30, and moving the conveyed object 10 in a target direction. For example, assume that the conveyed object 10 is located above (immediately above) one of two winding wires 30. Application of voltage to the winding wire 30 immediately underneath the conveyed object 10 does not generate force (thrust) in a conveying direction. On the other hand, application of voltage to the winding wire 30 above (immediately above) which the conveyed object 10 does not exist (the winding wire 30 not located immediately underneath the conveyed object 10) generates force to attract the conveyed object 10 to the winding wire 30, and generates force (thrust) in the conveying direction. That is, application of voltage to the desired winding wire 30 can efficiently generate force to the conveyed object 10 in the conveying direction. Furthermore, by selecting the winding wire 30 to which voltage is applied, an orientation (direction) of force in the conveying direction can be controlled.

### <Principle of Position Detection of Conveyance Container>

Position detection of the conveyed object 10 is described. In a case in which the conveyed object 10 is located on top of the winding wire 30 at a front side in FIG. 5, a magnetic field caused by the permanent magnet 11 acts on the winding wires 30. Here, a magnitude of the acting magnetic field differs between the winding wire 30 closer to the conveyed object 10, and the winding wire 30 farther from the conveyed object 10. That is, the magnitude of the magnetic field which acts on the winding wire 30 varies depending on a relative position between the conveyed object 10 and the winding wire 30.

The tooth 20 is made of a magnetic material, and has a property that passing of a magnetic flux through the tooth 20 becomes more difficult as the magnetic flux becomes larger. Here, when voltage is applied to the winding wire 30 to apply current, a magnetic flux (magnetic field) caused by the current occurs at the tooth 20. Therefore, at the tooth 20, a magnetic flux (magnetic field) from the permanent magnet 11 and the magnetic flux (magnetic field) caused by the current supplied to the winding wire 30 occur. Generally, when current is supplied to the winding wire 30, a magnetic field is generated therearound, and a caused magnetic flux is proportional to a current value. This constant of proportion is called inductance. When the magnetic field from the permanent magnet 11 exists, magnetic saturation is caused at the winding wire 30 and permeability is reduced, which leads to change in the current which flows in the winding wire 30.

In the case in which voltage is applied to the winding wire 30, by detecting current flowing in the winding wire 30 and a flowing manner thereof, an inductance L can be calculated. That is, by detecting the inductance L of the winding wire 30, which varies depending on the position of the permanent magnet 11, the position of the permanent magnet 11 which affects the inductance L can be obtained. Therefore, the drive circuit 50 is connected to the winding wire 30, and the current detecting unit 55 (e.g., a resistance is placed) which detects the current value flowing in the winding wire 30 is provided. Voltage is applied to the winding wire 30 by the drive circuit 50, the current value caused by the voltage is detected by the current detecting unit 55, and the value is read by the arithmetic unit 53.

Inductance characteristics differ between in the region where the electromagnetic actuators 70 are dense, and the region where the electromagnetic actuators 70 are sparse, which affects estimation of the position of the permanent magnet 11 and occurrence of thrust. That is, stable conveyance of the conveyed object 10 and operation requirements necessary for conveyance (e.g., conveying speed, conveying speed fluctuation, and acceleration-and-deceleration characteristics) are get affected. Therefore, in the embodiments, arrangement and a connecting method of the electromagnetic actuators 70 of the magnetic circuit sections 2 are devised. In the conveying system, reducing difference in inductance characteristics and thrust characteristics between the respective teeth is a significant point to realize stable conveyance. Therefore, devising the arrangement and connecting method of the electromagnetic actuators 70 of the magnetic circuit sections 2 leads to realization of a high-performance conveying device.

### <Specimen Analysis System and Specimen Pretreatment Device>

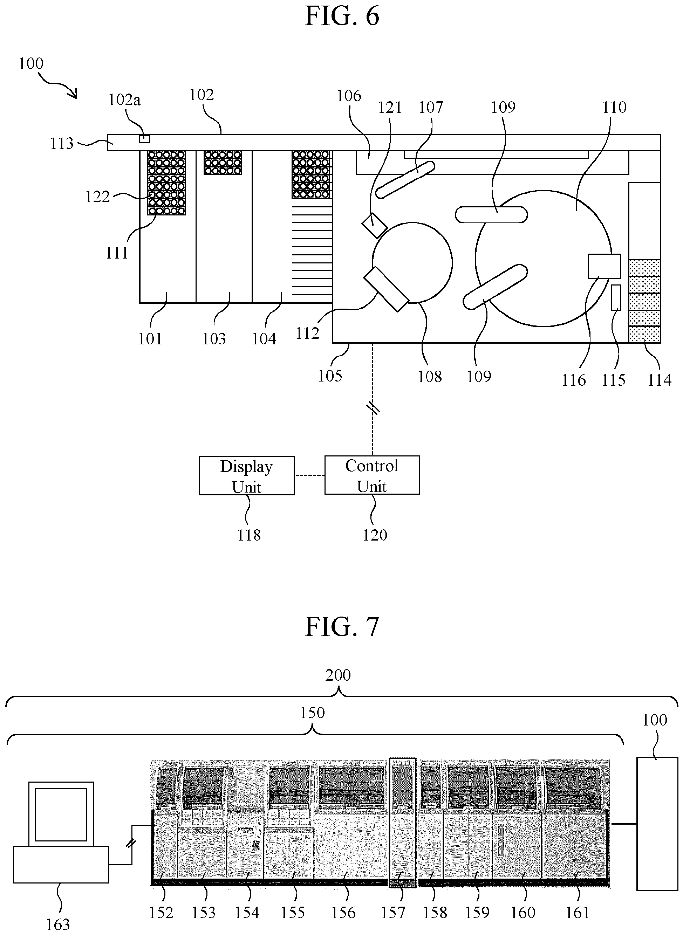

The entire configuration of a specimen analysis system 100 is described with reference to FIG. 6. FIG. 6 is a diagram schematically illustrating the entire configuration of the specimen analysis system 100.

In FIG. 6, the specimen analysis system 100 is a device which dispenses each of a specimen and a reagent to a reaction container to cause reaction, and measures the reaction liquid. The specimen analysis system 100 includes a loading unit 101, an emergency-rack inlet 113, a conveyance line 102, a buffer 104, an analysis unit 105, a storage unit 103, a display unit 118, and a control unit 120.

The loading unit 101 is a place where a specimen rack 111 which accommodates a plurality of specimen containers 122 each containing a biological sample such as blood and urine, is placed. The emergency-rack inlet 113 is a place to feed, into the device, a specimen rack (calibration rack) where standard liquid is placed, or the specimen rack 111 where the specimen container 122 containing a specimen which requires emergent analysis is accommodated.

The buffer 104 retains a plurality of specimen racks 111 conveyed by the conveyance line 102 such that a dispensing order of the specimens in the specimen racks 111 is changeable. The analysis unit 105 analyses the specimen conveyed from the buffer 104 via a conveyor line 106. The storage unit 103 retains the specimen rack 111 accommodating the specimen container 122 containing the specimen for which analyzation at the analysis unit 105 is finished. The conveyance line 102 is a line which conveys the specimen rack 111 placed at the loading unit 101, and has a configuration equivalent to any of the conveying devices discussed in Embodiment 1 and Embodiment 2. In the specimen analysis system, the permanent magnet 11 is provided to a back surface side of the specimen rack 111. That is, the specimen rack 111 is the conveyed object 10.

The analysis unit 105 includes the conveyor line 106, a reaction disc 108, a specimen dispensing nozzle 107, a reagent disc 110, a reagent dispensing nozzle 109, a cleaning mechanism 112, a reagent tray 114, a reagent ID reader 115, a reagent loader 116, and a spectrophotometer 121. The conveyor line 106 is a line to load, to the analysis unit 105, the specimen rack 111 placed in the buffer 104.

The reaction disc 108 is provided with a plurality of reaction containers. The specimen dispensing nozzle 107 dispenses the specimen from the specimen container 122 to the reaction container at the reaction disc 108 by rotary driving and vertical driving. The reagent disc 110 retains a plurality of reagent bottles. The reagent dispensing nozzle 109 dispenses a reagent from the reagent bottle in the reagent disc 110 to the reaction container at the reaction disc 108. The cleaning mechanism 112 cleans the reaction container at the reaction disc 108. The spectrophotometer 121 measures absorbance of the reaction liquid in the reaction container by measuring a transmitted light acquired through the reaction liquid from a light source (illustration omitted).

The reagent tray 114 is a member where a reagent is placed when reagent registration into the specimen analysis system 100 is conducted. The reagent ID reader 115 is a device which acquires reagent information by reading a reagent ID given to the reagent placed at the reagent tray 114. The reagent loader 116 is a device which loads the reagent to the reagent disc 110.

The display unit 118 is a display device which displays a result of concentration analysis of a given constituent in a liquid sample such as blood and urine. The control unit 120 is a computer having a CPU, a ROM, a RAM, a storage, etc., and controls operation of each mechanism in the specimen analysis system 100. The control unit 120 executes arithmetic processing to obtain the concentration of the given constituent in the specimen such as blood and urine.

Specimen analysis processing by the specimen analysis system 100 is as follows. First, the specimen rack 111 is placed at the loading unit 101 or the emergency-rack inlet 113, and is loaded to the randomly accessible buffer 104 by the conveyance line 102. The specimen analysis system 100 loads, to the analysis unit 105 by the conveyor line 106, the specimen rack 111 with the highest priority among the racks stored in the buffer 104 in accordance with a priority rule.

The specimen rack 111 brought to the analysis unit 105 is transferred to a specimen preparation position near the reaction disc 108 by the conveyor line 106. The specimen dispensing nozzle 107 preparatively samples the specimen from the specimen container 122 at the specimen rack 111 into the reaction container at the reaction disc 108. The specimen dispensing nozzle 107 performs the preparation of the specimen as many times as necessary corresponding to an analysis item ordered regarding the specimen. The specimen dispensing nozzle 107 preparatively samples the specimens from all the respective specimen containers 122 placed on the specimen rack 111. The specimen rack 111 in which the preparation processing to all the specimen containers 122 is finished is transferred to the buffer 104. Furthermore, the specimen rack 111 for which the entire specimen preparation processing, including automatic re-examination, is finished, is transferred to the storage unit 103 by the conveyor line 106 and the conveyance line 102.

Moreover, the reagent used for the analysis is preparatively sampled from the reagent bottle on the reagent disc 110 by the reagent dispensing nozzle 109. Then, the preparative reagent is dispensed to the reaction container where the specimen has been dispensed beforehand. Next, a stirring mechanism (illustration omitted) stirs the mixture liquid of the specimen and the reagent in the reaction container. Light caused from the light source transmits through the reaction container containing the stirred mixture liquid, and luminous intensity of the transmitted light is measured by the spectrophotometer 121. The luminous intensity measured by the spectrophotometer 121 is sent to the control unit 120 with an A/D converter and an interface interposed therebetween. Then, the control unit 120 executes calculation to obtain the concentration of the given constituent in the liquid sample such as blood and urine, and causes the display unit 118 etc. to display the result, and causes the storage unit (illustration omitted) to store the result.

Note that the specimen analysis system 100 is not necessarily provided with all the configurations depicted in FIG. 6, but a unit for pretreatment may suitably be added, and the units or configurations may partially be deleted. Moreover, the analysis unit 105 is not limited to an analysis unit for biochemical analysis, but may be one for immunological analysis, and furthermore, the number of analysis units 105 provided is not necessarily one, but may be two or more.

Next, the entire configuration of a specimen pretreatment device 150 is described with reference to FIG. 7. FIG. 7 is a diagram illustrating the entire configuration of the specimen pretreatment device 150. In FIG. 7, the specimen pretreatment device 150 is a device which executes various types of pretreatments necessary for analysis of a specimen. The specimen pretreatment device 150 includes a closure unit 152, a specimen storage unit 153, an empty-holder stacker 154, a specimen feeding unit 155, a centrifugal separation unit 156, a liquid volume measurement unit 157, an opener unit 158, a daughter-specimen container preparation unit 159, a dispenser unit 160, a transfer unit 161, and a control unit PC 163 which controls operation of the plurality of units.

The specimen pretreatment device 150 is connected to the specimen analysis system 100 which performs qualitative/quantitative analysis of a constituent of a specimen, as a transfer destination of the specimen processed by the specimen pretreatment device 150. The specimen feeding unit 155 is a unit which feeds the specimen container 122 containing a specimen into the specimen pretreatment device 150. The centrifugal separation unit 156 is a unit which performs centrifugal separation to the fed specimen container 122. The liquid volume measurement unit 157 is a unit which performs liquid volume measurement of the specimen contained in the specimen container 122. The opener unit 158 is a unit which opens the fed specimen container 122. The daughter-specimen container preparation unit 159 is a unit which performs preparation necessary for dispensing, at the subsequent dispenser unit 160, the specimen contained in the fed specimen container 122. The dispenser unit 160 is a unit which subdivides, for analysis by the specimen analysis system etc., the specimen applied with the centrifugal separation, and also attaches a barcode etc., to the subdivided specimen container 122 (hereinafter, the subdivided specimen container 122 is referred to as a daughter-specimen container 122). The transfer unit 161 is a unit which classifies the dispensed daughter-specimen container 122, and performs transfer preparation to the specimen analysis system 100. The closure unit 152 is a unit which closes the specimen container 122 and the daughter-specimen container 122. The specimen storage unit 153 is a unit which stores the closed specimen container 122.

The conveying device of Embodiment 1 or Embodiment 2 may be used as a mechanism to convey a specimen holder or the specimen rack which retains the specimen container 122, between the respective units, or between the specimen pretreatment device 150 and the specimen analysis system 100. Note that the specimen pretreatment device 150 is not necessarily provided with all the configurations described above, but the units or configurations may partially be deleted. Moreover, the specimen pretreatment device 150 may be provided with another unit other than the above-described units.

Moreover, the specimen analysis system of this embodiment may be a specimen analysis system 200 including the specimen pretreatment device 150 and the specimen analysis system 100 as depicted in FIG. 7. In this case, the conveying device 1 in Embodiment 1 and Embodiment 2 may connect not only within each system, but also between the specimen analysis system 200 and the specimen analysis system 200.

Note that, in the above-described embodiments, a case is illustrated, in which the specimen rack 111 which retains five specimen containers 122 containing specimens is conveyed as the conveyed object. Other than the specimen rack 111 which retains five specimen containers 122, a specimen holder which retains two specimen containers 122 may be conveyed as the conveyed object.

The specimen analysis systems 100 and 200, and the specimen pretreatment device 150 are provided with the conveying device 1 in Embodiment 1 and Embodiment 2. Therefore, the magnitude of thrust when the specimen rack 111 or the specimen holder is conveyed or stopped can be made less dependent on the position of the specimen rack 111 or the specimen holder. Moreover, the conveying device 1 in which a detection value and variation of current necessary for detection of the position of the specimen rack 111 or the specimen holder are stable can be provided. That is, the conveying device 1 in which controllability of the specimen rack 111 or the specimen holder is high, and estimation accuracy of the position of the specimen rack 111 or the specimen holder is high can be realized.

Note that the present invention is not limited to the above-described embodiments, but includes various modifications. The embodiments provide detailed description such that the description of the present invention is easy to understand, and the present invention is not limited to include all the described configurations.

Moreover, a partial configuration of one embodiment may be replaced by the configuration of an other embodiment, and the configuration of one embodiment may be added to the configuration of an other embodiment. Moreover, in terms of a partial configuration of each embodiment, addition of another configuration, deletion, and replacement are possible.

For example, Embodiment 1 and Embodiment 2 describe the case where the conveyed object which is conveyed by the conveying device is the specimen rack 111 and the specimen holder. However, the conveyed object is not limited to the rack, holder, etc., which retain the specimen container 122, but the target object for conveyance may be various objects for which large-scale conveyance is demanded.

### Reference Signs List

1: conveying device
2: magnetic circuit section
4: connected region
10: conveyed object
11: permanent magnet
15: conveyance surface
20, 20a, 20b, 20c, 20d: tooth
30: winding wire
35: specimen feeding device
36: specimen analysis device
37: dispensing device
40: yoke
100: specimen analysis system
101: loading unit
102: conveyance line
103: storage unit
104: buffer
105: analysis unit
106: conveyor line
107: specimen dispensing nozzle
108: reaction disc
109: reagent dispensing nozzle
110: reagent disc
111: specimen rack
112: cleaning mechanism
113: emergency-rack inlet
114: reagent tray
115: reagent ID reader
116: reagent loader
118: display unit
120: control unit
121: spectrophotometer
122: specimen container, daughter-specimen container
150: specimen pretreatment device
152: closure unit
153: specimen storage unit
154: holder stacker
155: specimen feeding unit
156: centrifugal separation unit
157: liquid volume measurement unit
158: opener unit
159: daughter-specimen container preparation unit
160: dispenser unit
161: transfer unit
163: control unit PC
200: specimen analysis system

## Claims

1. A conveying device in which a plurality of magnetic circuit sections each including electromagnetic actuators arranged in a grid pattern are connected one another, each electromagnetic actuator including a tooth made of a magnetic material and a winding wire wound around the tooth, wherein
each of the magnetic circuit sections has a substantially quadrilateral shape, and includes:
a plurality of first electromagnetic actuators disposed along one of sides opposed one another;
a plurality of second electromagnetic actuators disposed along an other one of the sides opposed one another;
a plurality of third electromagnetic actuators disposed along one of other sides opposed one another; and
a plurality of fourth electromagnetic actuators disposed along an other one of the other sides opposed one another,
the number of the first electromagnetic actuators is larger than the number of the second electromagnetic actuators,
the number of the third electromagnetic actuators is larger than the number of the fourth electromagnetic actuators, and
the plurality of magnetic circuit sections are connected one another such that the side having the larger number of the electromagnetic actuators and the side having the smaller number of the electromagnetic actuators are adjacent to each other.

2. The conveying device according to Claim 1, wherein a loading section for a conveyed object is provided adjacent to the side having the smaller number of the electromagnetic actuators.

3. The conveying device according to Claim 1, wherein an unloading section for a conveyed object is provided adjacent to the side having the smaller number of the electromagnetic actuators.

4. The conveying device according to Claim 1, wherein a loading section for a conveyed object is provided adjacent to the side, having the smaller number of the electromagnetic actuators, of the magnetic circuit section, and
an unloading section for the conveyed object is provided adjacent to the side, having the smaller number of the electromagnetic actuators, of the magnetic circuit section different from the magnetic circuit section provided with the loading section.

5. The conveying device according to Claim 1, wherein a dispensing device is disposed adjacent to the side having the larger number of the electromagnetic actuators, the dispensing device being configured to preparatively sample a specimen from a specimen container, or dispense a preparative specimen.

6. The conveying device according to Claim 1, wherein the side having the smaller number of the electromagnetic actuators is a fast conveyance line for a conveyed object, and the side having the larger number of the electromagnetic actuators is a slow conveyance line or a retention region for the conveyed object.

7. A specimen analysis system, comprising:
the conveying device according to Claim 2; and
a specimen feeding device disposed adjacent to the side having the smaller number of the electromagnetic actuators.

8. A specimen analysis system, comprising:
the conveying device according to Claim 3; and
a specimen analysis device disposed adjacent to the side having the smaller number of the electromagnetic actuators.

9. A specimen analysis system, comprising:
the conveying device according to Claim 5; and
the dispensing device disposed adjacent to the side having the larger number of the electromagnetic actuators.

10. A specimen pretreatment device, comprising the conveying device according to any one of Claims 1 to 6.
